# EUROPEAN PATENT SPECIFICATION

(11) **EP 1 404 143 B1**
(45) Date of publication and mention of the grant of the patent: **09.11.2011**
(21) Application number: 03103313.7
(22) Date of filing: 08.09.2003
(51) Int. Cl.: H04W 8/26

(54) **Handover of a wireless terminal**
Handover für ein drahtloses Endgerät
Transfert pour un terminal sans fil

(30) Priority: 12.09.2002 FI 20021638
(43) Date of publication of application: 31.03.2004
(73) Proprietor: Nokia Corporation, 02150 Espoo (FI)
(72) Inventor: Haverinen, Henry, 33720 Tampere (FI)
(74) Representative: Kantanen, Jukka

(56) References cited:
- EP-A2- 1 202 591
- WO-A2-98/43446

## Description

### BACKGROUND OF THE INVENTION

The invention relates to handover and particularly to handover and tunnel updating between access devices.

Data services developed for public mobile networks with extensive coverage areas and supporting the mobility of the user have evolved significantly in recent years. The packet switched General Packet Radio Service (GPRS) provides the GSM networks with efficient data transmission, where radio capacity is allocated only during packet transmission. The Universal Mobile Telecommunications System (UMTS) standardised by the Third Generation Partnership Project (3GPP) will offer an even broader data transmission capacity than the GSM/GPRS networks.

In addition to the data services offered by the PLMN networks, various wireless local networks have been developed that offer a broadband wireless data transmission service for a limited coverage area. The IEEE 802.11-based WLAN networks represent examples of such techniques. Such local networks can be used to offer in different hot spots, such as offices or airports, extremely fast data transmission and access to the Internet. Wireless local area networks and PLMN networks have also been converged. For example, base stations based on the GSM technology can be used in a data system of an office for providing a wireless connection to a local area network of the office. Then again, network elements have also been designed for wireless local area networks that allow the local network to utilize the PLMN network. For instance, network elements have been created for the WLAN networks according to the IEEE 802.11 standard and GSM networks that allow access to the authentication and billing services offered by the GSM network through the WLAN network. The co-operation between PLMN networks and wireless local area networks has been planned further so that the services offered by the PLMN network could also be used through a radio interface offered by the wireless local area networks. In the UMTS system, also referred to as the 3GPP system, the wireless local area network might operate as an access sub-system.

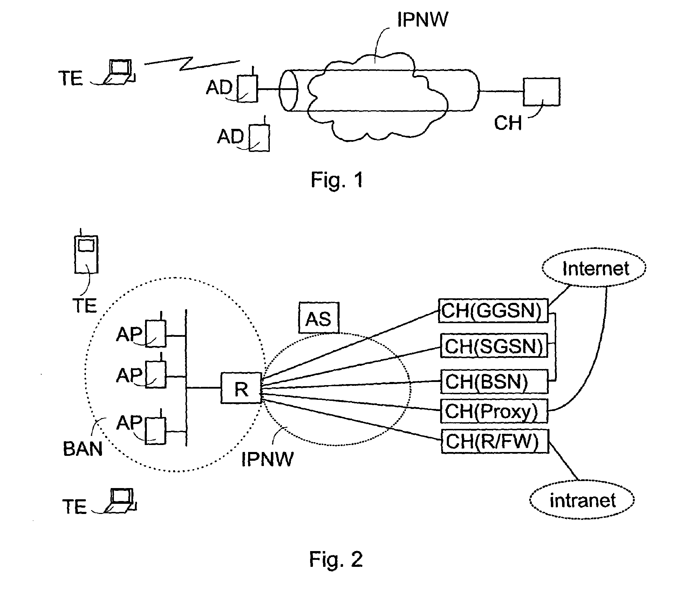

Referring to Figure 1, data transmission can be arranged from a local area network to a terminal TE over an IP network to a corresponding host CH using tunnelling. Thus, a tunnel is formed between an access device AD of a local network, such as an access point or a gateway device, and a corresponding host CH of an IP network, such as an edge router of a company's intranet network. The tunnel is an end-to-end path, where the data units to be transmitted are transparently transferred between the end points AD, CH of the tunnel by encapsulating the data units within new frames in the starting point of the tunnel and decapsulating the tunnelled frames in the end points of the tunnel. Various tunnelling techniques can be used in the IP networks, one example thereof being a Layer 2 Tunnelling Protocol (L2TP) that allows forming Virtual Private Networks (VPN). Another example of tunnelling techniques is the Generic Routing Encapsulation (GRE) that is commonly used in tunnels between IP routers.

However, the use of tunnels impedes the mobility of the terminals. When a terminal moves from the coverage area of a first access point to the coverage area of a second access point, the path arranged thereto through the first access point should be changed to the second access point, in other words handover must be carried out to the second access point. If the first access point functions as the end point of the tunnel, then the end point of the tunnel also has to be changed from the first access point to the second access point. This would require updating the corresponding host of the tunnel, meaning that the second access point is changed therein to the end point of the tunnel. Known tunnelling solutions do not, however, support the change of the end point of the tunnel. A solution to solve the problem has been to provide negotiation mechanisms of a higher level. For example, signalling mechanisms have been determined for a mobile IP protocol, according to which the location of the terminal can be updated for the home network. Publication WO 0 235 738 shows a handover method in a system utilizing the mobile IP protocol. In this method, a tunnel is provided between a foreign agent serving the terminal and a router. When handover is carried out for a terminal to the area of a second foreign agent, the second foreign agent is able to register to a home agent, from where an updating request concerning binding is sent to the router. The router may update the second foreign agent as the end point of the tunnel. However, the solution disclosed in publication WO 0 235 738 includes drawbacks. It is only suitable for a system that employs a mobile IP protocol. Changing the end point requires support from the router for the signalling mechanism needed for this purpose that is not often found in older routers. Changing the end point in the corresponding host of the tunnel generally causes additional signalling to the system and inconvenient delay to the delay critical applications in data transmission.

Prior art document EP 1202591, published on 2 May 2002, describes a method, system and device for a wireless terminal handover comprising a second IP address for second access device and updating about the new binding.

### BRIEF DESCRIPTION OF THE INVENTION

It is an object of the invention to provide a method and an apparatus implementing the method so as to avoid the problems associated with changing the tunnel in a corresponding host. The object of the invention is achieved with a method, a system and an access device, characterized in what is disclosed in the independent claims. The preferred embodiments of the invention are disclosed in the dependent claims.

The invention is based on an idea that completely differs from previous solutions that an address allocated particularly for a terminal is used as a tunnelling IP address, which address is maintained when handover is carried out from a first access device to a second access device. In a first access device, the tunnelling IP address is allocated for data transmission of the terminal for a tunnel to be formed in a corresponding host, to which tunnelling IP address the tunnel is bound. At least the allocated tunnelling IP address is moved from the first access device to a second access device in response to detecting a need to change a wireless connection of the terminal to be arranged by the second access device. What is determined in the second access device, is binding between the tunnelling IP address and the network interface of the second access device, i.e. the tunnel is thus bound to the second access device. Information concerning the new binding between the network i n-terface of the second access device and the allocated tunnelling IP address is sent to at least one network node in the system.

Handover should be widely interpreted to indicate any mechanism that allows changing the logical connection or context enabling data transmission to be handled by the second access device. Thus, changing the packet switched data transmission context to be handled by the second access device means carrying out handover, even though user data is not transferred at that particular moment (in circuit-switched networks handover typically only refers to transferring an active call). What the network interface of the second access point generally refers to is any interface, to which the tunnel can be bound from the second access point to the corresponding host. The network interface may for instance be an Ethernet interface.

The solution of the invention provides such an advantage that the corresponding host need not be updated owing to the change of the other end point in the tunnel. An active connection can then be changed from an access device, for instance from the access point of a wireless local area network to another, also when tunnelled connections are being used. Higher layer signalling solutions are not required to support mobility, and the problems associated with updating the corresponding host can be completely avoided. No changes are required to be made in the tunnelling protocols, the implementation of the corresponding hosts in the tunnels, the terminals or the standards between the terminal and the access devices. Since the end point of the tunnel can be locally changed, the delay caused by the signalling messages to be sent to the corresponding host or received therefrom can be avoided, which may be of significance to the delay critical applications.

In accordance with a preferred embodiment of the invention, said binding refers to binding between a MAC address in the network interface and the tunnelling IP address. Consequently, information concerning the new binding can, if required, be updated within a sub-network to other network nodes in the sub-network, and thereafter the packets are transferred in the sub-network to the second access device using the mechanisms in the data link layer.

### BRIEF DESCRIPTION OF THE DRAWINGS

In the following the invention will be described in greater detail by means of the preferred embodiments with reference to the accompanying drawings, in which:
Figure 1 illustrates tunnelling;
Figure 2 illustrates a local network, in which a tunnel can be arranged from an access point to various corresponding hosts;
Figure 3 shows a method according to a preferred embodiment of the invention;
Figure 4 shows a method according to a preferred embodiment of the invention; and
Figure 5 is a signalling diagram showing handover in accordance with a preferred embodiment of the invention.

### DETAILED DESCRIPTION OF THE INVENTION

Figure 2 illustrates a local network BAN, where a tunnel can be arranged from an access point AP to various corresponding hosts CH. The local network BAN is in accordance with a preferred embodiment a wireless local area network employing user authentication and network access control according to an IEEE 802.1x standard, such as a wireless local area network according to the IEEE 802.11 standard. However, the invention can also be applied in other IEEE 802-based wireless local area networks or in other types of local network BANS, typically in networks operating at un-licensed frequency bands, such as a network according to the BRAN (Broadband Radio Access Networks) standard, a Home RF network or a Bluetooth network. The BRAN standards comprise High Performance Radio Local Area Network HIPERLAN standards of types 1 and 2, HIPERACCESS and HIPERLINK standards.

The access point AP controls the radio interface in accordance with the radio technology used, according to an embodiment in accordance with the IEEE 802.11 standard. The IEEE 802.11 specifications determine the protocols of both a physical layer and a MAC layer for data transmission over the radio interface. Infrared or two spread spectrum techniques (Direct Sequence Spread Spectrum DSSS, Frequency Hopped Spread Spectrum FHSS) can also be employed in data transmission. A 2.4 gigahertz band is used in both spread spectrum techniques. The MAC layer employs what is known as a CSMA/CA technique (Carrier Sense Multiple Access with Collision Avoidance). The access point AP also bridges radio interface data flows or routes said data flows to other network nodes, such as other access points or routers R, and from other network nodes. Typically, the local network BAN comprises one or more sub-networks, and the access points included therein are connected to one another and transfer information to other IP-based networks IPNW through the router R of the sub-network. The terminal TE may for instance be an integrated communication device, a laptop computer, combined with an apparatus offering radio access (such as a WLAN card), or a combination of a PDA device and a mobile phone.

The access point AP may form a tunnel with the corresponding host CH of the IP network, typically through the router R. As Figure 2 illustrates, different networks may comprise different types of corresponding hosts CH, with which the access point AP may have to form a tunnel in order to transfer the data of a terminal TE.

The corresponding host CH may for example be an SGSN CH (SGSN) (Serving GPRS Support Node) of the public land mobile network PLMN or a GGSN CH (GGSN) (Gateway GPRS Support Node), whereby the services of the PLMN networks can be utilized through a local network. The PLMN may be a second generation network, such as the GSM/GPRS network, or a third generation network, such as the Universal Mobile Telecommunications System UMTS network defined by the 3^{rd} Generation Partnership Project organization, also referred to as the 3GPP system network.

The SGSN may serve the mobile stations connected to the PLMN network and offer the terminal TE access to the services of the PLMN network, for example, through the local network BAN. Thus, forming a tunnel to the SGSN CH (SGSN) functioning as the corresponding host, the services offered by the serving node SGSN can be utilized from the local network. For example, charging data of the terminal can be transferred to the operating node SGSN. The tunnel formed to the operating node SGSN could also be used when the terminal moves from the base station area within the SGSN to the access point AP area to offer a data transmission connection further through the PLMN network and the SGSN. Consequently, the service offered to the terminal TE is not to be altered owing to the transfer, and the data transmission may still proceed through the same GGSN. Such a situation may arise when the operations are transferred from a GPRS network area to a company's internal network.

The gateway support node GGSN offers gateway operation to networks outside the PLMN network, such as the Internet or a company's intranet network. The user of the terminal TE, which may be a dual-mode or multi-mode mobile station, may have an agreement with the operator of a home PLMN network and the user may wish to use the gateway node GGSN of the home network to arrange data transmission to other networks also when using the services of the local network BAN. Thus, a tunnel is provided from the access point AP to the corresponding host CH (GGSN) arranging access to other networks. In such a case, the GGSN may also offer charging services. The tunnel may be in accordance with the GPRS Tunnelling Protocol (GTP) used between the operating node SGSN and the gateway node GGSN. One of the possible applications of the invention is to hand over the GTP tunnel. Even though the GTP protocol provides measures for updating the altered SGSN to the gateway node GGSN, such updating typically rarely occurs, much less frequently than the transfers between the access points AP in wireless local networks BAN. If tunnelling is desired from the wireless local network to the GGSN, it is preferable that each local network BAN has the appearance of one logical SGSN, whereby the internal mobility of each local network BAN is not shown for the GGSN. This becomes possible when a transfer from one access point AP to another is made using a local tunnel transfer according to a preferred embodiment. GTP signalling has to be used only when transfers are made between local network BANs, in order to update the end point.

In accordance with a preferred embodiment the PLMN network comprises in addition to known network elements a Broadband Service Node BSN supporting an Iu interface for one or more local network BANS. In this embodiment, the user and signalling data of the PLMN network is transparently transferred over the wireless access point AP and the IP network. After a successful authentication (carried out by a BSN or a separate authentication server AS), the mobile station MS may also use the services of the visited PLMN network through the local network BAN and the service node BSN. The operation of the service node BSN corresponds to a great extent with the operation of a radio network controller RNC. The services of the service node BSN may include:
- Performing RRC (Radio Resource Control) signalling protocols determined for a radio access network of the PLMN network, such as the UTRAN network, possibly in accordance with the BAN specified restrictions
- Multiplexing a higher layer PLMN network, for instance UMTS data flows such as logical channels or conveying channels to IP-based transfer paths in the local network BAN, and demultiplexing from the local network BAN
- Radio connection management
- Arranging the encryption of the PLMN network
- Compressing the IP header fields of the PLMN network
- Re-sending the RLC (Radio Link Control) layer of the PLMN network

The operations of the service node BSN may possibly also comprise monitoring the use of the resources of the local network BAN in order to check the billing of the BAN operator. Several PLMN networks may utilize the local network BAN. The local network BAN may be connected to several service nodes BSN and the BSN may be connected to one or more local network BANS. The BSN can be divided into separate server operations of the gateway and control plane of a user plane. The BSN may be connected to a serving node SGSN, to a Mobile Switching Centre MSC and possibly to other elements in the PLMN core network through the interfaces of the standards. The BSN may also be connected to other BSN nodes or to the radio sub-network in the PLMN network, such as the RNC elements in the UTRAN network through lur signalling interfaces for supporting handover within the UTRAN network or between the UTRAN networks. In this embodiment, the MS includes means for implementing the lower layers (L1, L2) of the local network BAN and means for carrying out data transmission with the PLMN network through the local network BAN. In accordance with a preferred embodiment, the MS is a dual-mode terminal, which is capable of communicating in addition to the local network BAN with the PLMN network, such as the UMTS network, through the base stations (Node B) of the UTRAN. In order for the MS to be able to establish a connection to the PLMN network through the local network BAN, the MS must also include the following operations:
- Implementing the PLMN network, for instance the signalling protocols of higher layers determined by the 3GPP specifications. Such protocols include RRC (Radio Resource Control), session management and mobility management.
- Performing the limited functionality of the user plane protocols in the PLMN network and communicating the user plane data with the node BSN taking the possible restrictions caused by the local network BAN into account. Such protocols include RLC (Radio Link Control) and PDCP (Packet Data Control Protocol).
- Multiplexing the data flows of the higher protocol layers in the PLMN network with the UDP/IP-based data transmission of the lower layers and in reverse demultiplexing the received data as the data flows of the PLMN network.

In this embodiment, a tunnel can be provided between the access point AP and the service node BSN (i.e. CH(BSN) as regards the tunnelling), by means of which the signalling and user data of the higher layers in the PLMN network can be transferred between the access point AP of the local network BAN and the service node BSN.

In accordance with an embodiment, a proxy server CH (Proxy) functions as a corresponding host of the tunnel that typically functions as an intermediate device for transmitting data to the Internet, for instance.

In accordance with an embodiment, a router CH(R/FW) functions as the corresponding host of the tunnel on the border of the IP network IPNW and another network, for instance an IP-based intranet. The CH(R/FW) may also comprise a firewall FW functionality. This is a typical tunnelling scenario, whereby a tunnel is created over the Internet in a company's internal network, for instance. Thus, a VPN connection can be established for a terminal visiting the local network BAN; the VPN functionality is generally installed in the firewall server. The data to be transferred is typically encrypted during transmission.

Any tunnelling protocols may be used in the previous examples. In accordance with an embodiment, an L2TP Network Server (LNS) according to the L2TP protocol functions as the corresponding host of the tunnel, and an L2TP Access Concentrator (LAC) according to the L2TP protocol is implemented at the end point of the tunnel in the local network BAN. In accordance with another embodiment, a GRE protocol is used as the tunnelling protocol, whereby a router functions as the corresponding host that supports the tunnelling protocol concerned.

It should be noted that the tunnel from the local network BAN may be formed from an access controller AC of the local network BAN instead of the access point AP, said access controller might also be referred to as PAC. Such an access controller AC may control several access points, function as a gateway and the functionality thereof may be located in a router device R, for example.

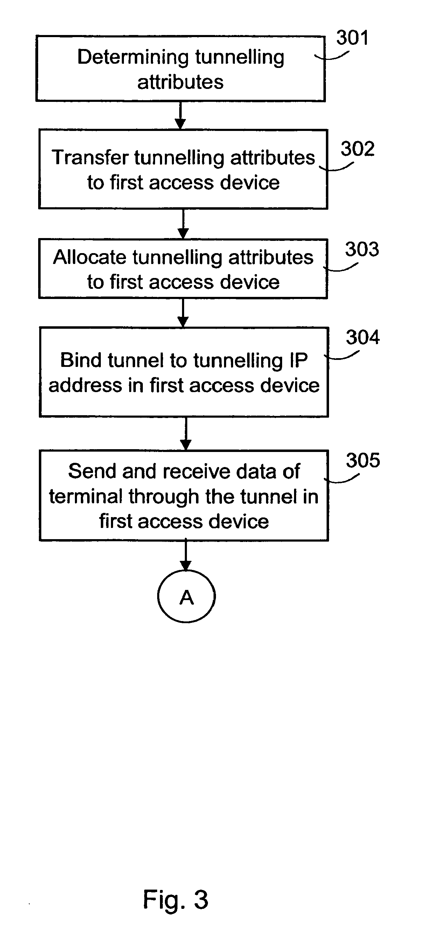

Figure 3 illustrates a method according to a preferred embodiment of the invention. Tunnelling attributes are determined in step 301 between a first access device, such as the AP or R, and the corresponding host CH. Required tunnelling attributes, at least the IP address of the corresponding host CH, are transferred 302 to the first access device.

The tunnelling attributes can be determined 301 and transferred 302 for instance during the signalling between the first access device and the corresponding host CH on the basis of a service request from the terminal TE or the corresponding host CH (or through the CH). In accordance with an embodiment, the tunnelling attributes are determined 301 as a part of the authentication of the terminal TE before arranging the tunnel to the corresponding host CH. An authentication server AS can be used, a RADIUS server according to an embodiment, which transfers the tunnelling attributes to the first access device of the local network, if the authentication has been successful. An example of authentication, where the tunnelling attributes can be determined and transferred to an access device of a wireless local network, is to apply the IEEE802.1x authentication mechanism to the RADIUS server. Then, the access point functioning as the IEEE802.1x authenticator requests the RADIUS server to authenticate the terminal TE. The RADIUS server also determines the tunnelling attributes and sends them to the access point AP, if the authentication has been successful. The Internet draft "*IEEE 802.1x RADIUS Usage Guidelines*" Congdon et al., 17 June 2002, 29 pages, shows such an authentication process.

In accordance with a preferred embodiment, in response to the successful authentication and the received tunnelling attributes, an IP address is allocated 303 in the first access device for the terminal TE for data transmission thereof and a tunnelling IP address for the tunnel to be formed for the data transmission of the terminal, said tunnelling IP address being used as the end point of the tunnel transferring data of the terminal. The IP address to be used for data transmission can also be allocated in a separate Dynamic Host Configuration Protocol DHCP server. Fixed IP addresses are alternatively used, in which case said IP address is not allocated.

In the first access device, the tunnel determined by the tunnelling attributes is bound 304 to the tunnelling IP address. Thus, a tunnel is determined in the first access device, the end points thereof being the tunnelling IP address and the IP address of the corresponding host. After this, data transmission through the tunnel can be initiated 305, whereby the access device encapsulates the packets arriving from the terminal to the corresponding host CH and correspondingly decapsulates the packets sent from the corresponding host and destined for the terminal and forwards the data to the terminal TE using a wireless link. The packets destined to the tunnelling IP address functioning as the other end point of the tunnel are thus forwarded to the network interface of the first access point, preferably to a MAC address of the network interface. Using the tunnel-specific tunnelling IP addresses in the access device differs substantially from the conventional tunnelling solutions, in which the end points of the tunnel employ the specific IP addresses thereof as identifiers of the end point of the tunnel.

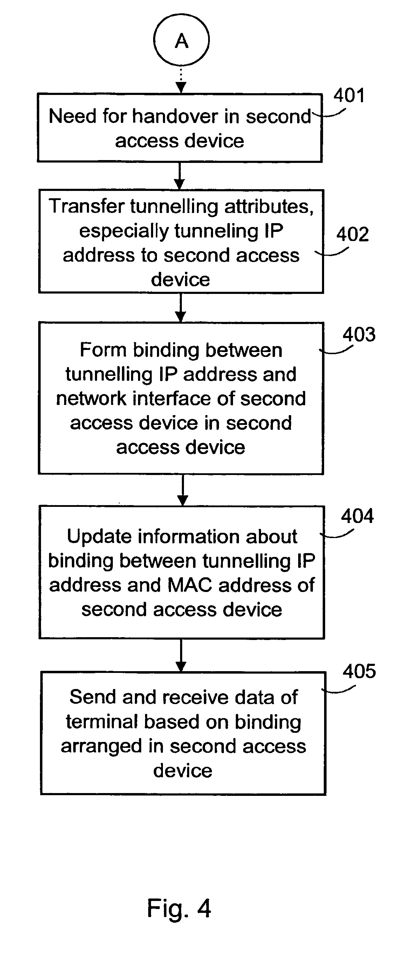

Referring to Figure 4, the following steps are described in a method according to a preferred embodiment. When a need 401 is detected to change the wireless connection of the terminal to be implemented by a second access device, tunnelling attributes are transferred 402 from the first access device, especially the IP address of the corresponding host and the tunnelling IP address allocated to the terminal in the first access device, and other state information possibly relating to the terminal, to the second access device.

The need for handover 401 typically arises when the terminal moves to the coverage area of the second access device, whereby the terminal TE can be provided with a radio link of superior quality through the second access device. In accordance with an embodiment, when the need to change to the second access device is denoted in the terminal TE, the terminal sends a service request to the second access device. After this the terminal TE is provided with a data transmission connection to the second access device. The second access device observes that the terminal TE already communicates with the first access device. Then, for example, authentication does not necessarily have to be carried out again, instead the second access device may request for information associated with the connection from the first access device using an IAPP protocol (Inter Access Point Protocol), for instance. In response to the request, the first access device observes the need for handover and carries out step 402, and after this the original binding between the tunnelling IP address and the network interface can be removed. The IAPP protocol is manufacturer-specific, wherefore handover from one access device to another can be implemented in various ways. What is essential is that all state information associated with the terminal is transferred from the original access device to another access device. For example in the IEEE 802.11 protocol, during handover, the terminal informs the second access device about the MAC address of the first access device. Thus the second access device sends a message to the first access device. In response to said message, the first access device sends the context associated with the terminal to the second access device.

The tunnelling attributes to be transferred 402 to the second access device comprise at least some of the following: a tunnelling IP address allocated locally to the tunnel of the terminal, an IP address of the corresponding host, attributes and state information associated with the tunnelling protocol in use, such as state information concerning an L2TP connection, different attributes associated with encryption and general safety, such as attributes of the IPsec context. In accordance with a preferred embodiment, the IAPP protocol is used for transferring said information to the second access device.

In the second access device, binding is determined 403 between the tunnel determined by the tunnelling attributes and the second access device, especially between the tunnelling IP address and the network interface of the second access device, advantageously the MAC address of the network interface. Thus, the second access device configures the starting point of the tunnel to one of the interfaces in the wired network included therein. Information about the new binding between the MAC address of the second access device and said tunnelling IP address is sent 404 to at least one network node. Such information is preferably sent to at least one router R in the local network BAN. Typically the access devices belong to the same sub-network, whereby it suffices that (regarding an external IP network IPNW) a new entry is updated in a binding table of the router located on the border of the sub-network concerning the binding between the tunnelling IP address and the MAC address of the second access device that replaces the binding of the tunnelling IP address of the first access device and the MAC address of the first access device. This can be implemented using conventional mechanisms of the data link layer, and the operation thereof does not require any new properties of the router. Naturally the new binding between the tunnelling IP address and the MAC address of the second access device can be conveyed to any one of the nodes in the same sub-network. After updating, information to or from the terminal to or from the corresponding host is transferred 405 to and from the second access device using the arranged binding. The invention does not either require any changes to the terminal TE; the wireless link can be changed from the first access device to the second access device utilizing already known mechanisms.

It should be noted that the configuration of the local network BAN may be such that the second access device does not have to send information about the binding to any other network node, but it suffices that the binding is updated (404) to the memory thereof. Here, the network node refers to the second access device.

Different tunnelling scenarios are illustrated above. The invention can be applied to any system applying any tunnelling protocol. Some of the tunnelling protocols that can be used have already been mentioned: L2TP, GRE, IP-in-IP Tunneling, Point-to-Point Tunneling Protocol (PPTP), IP Encapsulating Security Payload in the Tunnel-mode (ESP), IP Authentication Header in the Tunnel-mode (AH), Ascend Tunnel Management Protocol (ATMP), Layer Two Forwarding (L2F), Bay Dial Virtual Services (DVS), and Virtual Tunneling Protocol (VTP). As mentioned above, the GTP tunnel can also be changed locally in accordance with a preferred embodiment, whereby the information associated with the GTP tunnel is transferred from the first access device to the second access device, which starts using them.

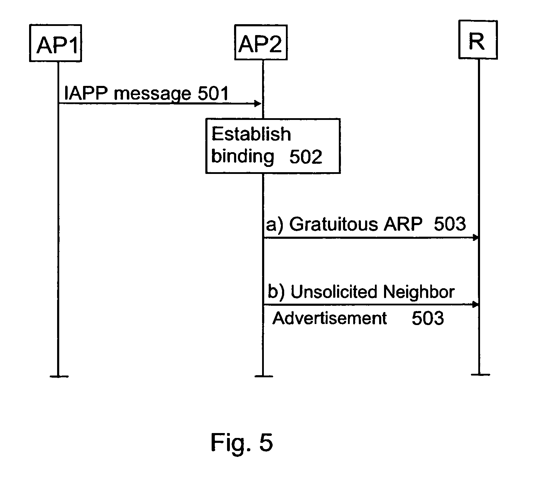

Figure 5 is a signaling diagram that further illustrates messages associated with handover in accordance with a preferred embodiment of the invention, in which the IAPP protocol and a) an IPv4 protocol or b) an IPv6 protocol are used. When a need arises to carry out handover for the terminal TE from a first access point AP1 to a second access point AP2, the AP1 sends the tunneling attributes as well as the tunneling IP address to the second access point AP2 using an appropriate IAPP message 501. The AP2 forms a binding 502 as illustrated above between the tunneling IP address and the MAC address. The AP2 sends 503 to the router R in the system using a) the IPv4 protocol by an ARP table updating message [Gratuitous ARP], on the basis of which the R updates the ARP table thereof. If the system uses the IPv6 protocol, the AP2 sends 503 an Unsolicited Neighbour Advertisement message sent without a request according to b) the IPv6 protocol, on the basis of which the R updates the neighbour table thereof. After the message 503, the packets received by the router, in which the tunneling IP address is the target address, are automatically transferred to the second access point AP2. Situations may also arise, where the network node inquires about a receiver (the MAC address) for the received packet, in which the tunneling IP address is the target address. Then, the AP2 responds using the MAC address thereof after handover. Deviating from the above, it is also possible that the first access point AP1 updates (503 or 504) the binding information of at least one network node instead of the second access point AP2.

In accordance with an embodiment, the first access point (AP1) may forward the packets arriving thereto to the second access point (AP2). Thus, a temporary route to the second access point is added to the routing table of the first access point, i.e. the original binding is changed in the first access point to indicate the MAC address of the second access point. The added binding can be removed for instance after a predetermined threshold time. This embodiment allows to avoid or at least to reduce the losses of packets sent during the change.

In accordance with a preferred embodiment, updating the local tunnel allows avoiding the delay caused by signaling resulting from the change of the end point to the corresponding host that the following example illustrates. Let us presume that the corresponding host of the tunnel sends a packet to the terminal TE. As the packet is still on its way, the access point is changed to the terminal TE. The new access point is locally updated (in Figure 5, messages 503, 504) to the nodes of the local network BAN on the data link layer, for example using the ARP protocol. Thereafter the tunneled packet arrives at the link layer of the node in the local network BAN. The packet is correctly routed to the new end point (AP2), even though it was sent before handover (prior to step 501).

In accordance with an alternative embodiment, the same address as the terminal TE uses is employed as the tunneling IP address, i.e. the address that is typically allocated in the local network BAN, when the terminal has been authenticated, and is then sent to the terminal. The access device (the first or the second) then uses the tunneling IP address as the termination address of the tunnel that happens to be also the identifier of the terminal TE. Consequently the packets destined to the IP address concerned are transferred to the MAC address of the access device, the packets being received in the local network BAN. The same IP address is used at two levels, in other words as the source/target address of the encapsulated packet and as the source/target address of the IP packet including in the encapsulated packet. The access device is arranged to transfer the packets received from the tunnel to the terminal TE and to send the packets received from the terminal TE to the tunnel using said IP address. Handover from the first access device to the second access device can be carried out as illustrated above in Figures 4 and 5, whereby the MAC address of the second access device is bound to the tunneling IP address. If packets destined to the terminal TE are sent in the local network, for instance, from another access point (i.e. without a tunnel), the packets are transferred on the basis of the valid binding to the access point serving the terminal that changes the MAC address of the terminal TE to the MAC address of the packets and forwards them to the terminal TE. Correspondingly, when the serving access device receives a packet from the terminal, which is not intended to be conveyed by the tunnel, the access device merely forwards the packet in accordance with the target address. Alternatively the tunneling IP address is bound to the MAC address of the terminal TE, whereby the bridging protocols of the access points allow the correct access point to be able to transfer the packets of the terminal to the air interface. Then the access point tunnels and removes the tunnel as a part of the bridge.

Still in accordance with a preferred embodiment, the access point AP (or access controller AC) in the local network BAN operates as a mobile node (MN) in accordance with the IP mobility protocol. Thus the access point can basically be moved into any network, also between sub-networks, and the IP mobility protocol makes sure that the packets of the corresponding host always find the destination thereof. The change of tunnel illustrated above can also be utilized in this embodiment. Thus, when changing the tunnel to a new access point AP (or access controller AC) the state of the IP mobility customer device is also moved, i.e. the possible authentication keys, the address of the home agent, and the state information concerning the mobility bindings. In such a case, the IP address of the access point would function as a care of address in the IP mobility protocol, the tunneling IP address (which is not changed when changing access points) would function as a home address according to the IP mobility protocol, and the network node, for which the information about the new binding is updated, is a home agent (which is typically located outside the local network BAN). In other words, when the tunnel is changed to another access point, the information concerning the binding is updated between the tunneling IP address and the IP address of the network interface of the second access point to the home agent.

The access points AP comprise one or more processors and a memory, by means of which the inventive means, the embodiments of which are illustrated in Figures 2 to 5, can be implemented. Consequently the inventive means can be implemented in the processing unit employing a computer program code. It is also possible to use hardware solutions or a combination of hardware and software solutions to implement the inventive means.

It is obvious for those skilled in the art that as technology progresses the basic idea of the invention can be implemented in various ways. The invention can also be applied in telecommunication systems other than those comprising a local network, such as the systems comprising for instance the PLMN network, in which tunneling is used. The invention and the embodiments thereof are therefore not restricted to the above examples but may deviate within the scope of the claims.

## Claims

1. A method for performing handover of a wireless terminal in a telecommunication system, in which a terminal is provided with a connection to an access device, from which a tunnel is arranged to a corresponding host for data transmission of the terminal,
**characterized by**
the method comprising the following steps performed by a receiving access device:
a- receiving at least a tunneling IP address allocated for a tunnel for data transmission of the terminal from a sending access device in response to detecting a need to change the connection of the terminal to be carried out by the receiving access device;
b- determining a binding in the receiving access device between the tunneling IP address and a network interface of the receiving access device, and
c- updating the information concerning the new binding between the network interface of the receiving access device and the tunneling IP address for at least one network node in the system.

2. A method as claimed in claim 1, **characterized by**
determining tunnelling attributes in an authentication server, at least an IP address of the corresponding host and the tunnelling IP address allocated to the terminal in the sending access device, as a part of the authentication of the terminal before arranging the tunnel to the corresponding host,
transferring the tunnelling attributes to the sending access device in response to a successful authentication,
allocating to the terminal in the sending access device the IP address used in the data transmission of the terminal and the tunnelling IP address for the tunnel to be formed for the data transmission of the terminal that is used as an end point of the tunnel transferring data of the terminal,
binding the tunnel determined by the tunnelling attributes in the sending access device to the tunnelling IP address,
forming the tunnel, whose end points include the tunnelling IP address and the IP address of the corresponding host, and thereafter the data transmission to the tunnelling IP address is transferred to a network interface of the sending access device.

3. A method as claimed in claim 1 or 2, **characterized by** transferring data between the terminal and the corresponding host using the binding arranged to the receiving access device after updating.

4. A method as claimed in any one of the preceding claims, **characterized in that** the network node is a router in a local network.

5. A method as claimed in any one of the preceding claims, **characterized in that** said binding refers to binding between a medium access control address of the network interface and the tunnelling IP address.

6. A method as claimed in any one of the preceding claims, **characterized in that** the system supports an IP version 6 protocol, whereby the information concerning the new binding is sent to at least one network node connected to the sending access device and to the receiving access device to the routing table thereof using a neighbour discovery protocol .

7. A method as claimed in any one of the preceding claims 1 to 5, **characterized in that** the system supports an IP version 4 protocol, whereby the information concerning the new binding is sent to at least one network node connected to the sending access device and to the receiving access device to an ARP table thereof using an ARP protocol.

8. A method as claimed in any one of the preceding claims, **characterized in that** the sending access device and the receiving access device are access points of a wireless local network connected to one another through a wired local network.

9. A telecommunication system comprising at least a sending access device, a receiving access device and a terminal, in which
the sending device is arranged to provide the terminal with a connection and to form a tunnel between a corresponding host and the sending access device for data transmission of the terminal,
**characterized in that**
the sending access device is arranged to allocate a tunnelling IP address for the tunnel to be formed for the data transmission of the terminal, to which tunnelling IP address the tunnel is bound,
the sending device is arranged to transfer at least the tunnelling IP address to a receiving access device in response to detecting a need to change the connection of the terminal to be carried out by the receiving access device;
the receiving access device is arranged to form a binding between the tunnelling IP address and the network interface of the receiving access device, and
the second access device is arranged to update the information concerning the new binding between the network interface of the second access device and the tunnelling IP address for at least one network node in the system.

10. A telecommunication system as claimed in claim 9, **characterized in that** transferring data between the terminal and the corresponding host after updating is arranged in the telecommunication system using the binding arranged to the receiving access device.

11. A telecommunication system as claimed in claim 9 or 10, **characterized in that** the network node is a router in a local network.

12. A telecommunication system as claimed in claim 9, 10 or 11, **characterized in that** said binding refers to the binding between a MAC address of the network interface and the tunnelling IP address.

13. An access device for a telecommunication network comprising means for providing a terminal with a connection and means for forming a tunnel between a corresponding host and an access device for data transmission of the terminal, **characterized in that**
the access device is arranged to receive at least a tunnelling IP address allocated for a tunnel for the data transmission of the terminal in response to detecting a need to change the connection of the terminal to be implemented by the access device, and
the access device is arranged to form a binding between the tunnelling IP address and the network interface, and
the access device is arranged to update the information concerning the new binding between the network interface and the tunnelling IP address to at least one network node included in the system.

14. An access device as claimed in claim 13, **characterized in that**
the access device is arranged to transfer data after updating between the terminal and the corresponding host using the binding formed.

15. An access device as claimed in claim 13 or 14, **characterized in that** said binding refers to the binding between a MAC address of the network interface and the tunnelling IP address, whereby
the access device is arranged to send the information concerning said binding using an ARP protocol or a Neighbour Discovery protocol.

## Patentansprüche

1. Verfahren zum Durchführen eines Handovers eines drahtlosen Endgeräts in einem Telekommunikationssystem, in dem ein Endgerät mit einer Verbindung zu einer Zugangsvorrichtung versehen wird, von der aus ein Tunnel zu einem entsprechenden Host für eine Datenübertragung des Endgeräts eingerichtet wird,
**dadurch gekennzeichnet, dass**
das Verfahren die folgenden Schritte umfasst, die von einer empfangenden Zugangsvorrichtung ausgeführt werden:
a) Empfangen mindestens einer Tunnel-IP-Adresse, die für einen Tunnel für Datenübertragung des Endgeräts zugewiesen ist, von einer sendenden Zugangsvorrichtung in Reaktion auf das Erfassen einer Notwendigkeit zum Ändern der Verbindung des Endgeräts dahingehend, dass sie von der empfangenden Zugangsvorrichtung ausgeführt werden soll;
b) Bestimmen einer Anbindung in der empfangenden Zugangsvorrichtung zwischen der Tunnel-IP-Adresse und einer Netzschnittstelle der empfangenden Zugangsvorrichtung; und
c) Aktualisieren der Informationen über die neue Anbindung zwischen der Netzschnittstelle der empfangenden Zugangsvorrichtung und der Tunnel-IP-Adresse für mindestens einen Netzknoten in dem System.

2. Verfahren nach Anspruch 1, **gekennzeichnet durch**
Bestimmen von Tunnel-Attributen in einem Authentifizierungsserver, mindestens einer IP-Adresse des entsprechenden Hosts und der Tunnel-IP-Adresse, die dem Endgerät in der sendenden Zugangsvorrichtung zugewiesen wurde, als Teil der Authentifizierung des Endgeräts, bevor der Tunnel zu dem entsprechenden Host eingerichtet wird;
Übertragen der Tunnel-Attribute an die sendende Zugangsvorrichtung in Reaktion auf eine erfolgreiche Authentifizierung;
Zuweisen, an das Endgerät in der sendenden Zugangsvorrichtung, der IP-Adresse, die bei der Datenübertragung des Endgeräts genutzt wird, und der Tunnel-IP-Adresse für den Tunnel, der für die Datenübertragung des Endgeräts gebildet werden soll, das als ein Endpunkt des Tunnels genutzt wird, der Daten von dem Endgerät überträgt; Anbinden des Tunnels, der **durch** die Tunnelattribute bestimmt wird, in der sendenden Zugangsvorrichtung an die Tunnel-IP-Adresse;
Bilden des Tunnels, dessen Endpunkte die Tunnel-IP-Adresse und die IP-Adresse des entsprechenden Hosts einschließen, und danach Übertragen der Datenübertragung an die Tunnel-IP-Adresse an eine Netzschnittstelle der sendenden Zugangsvorrichtung.

3. Verfahren nach Anspruch 1 oder 2, **gekennzeichnet durch**
Übertragen von Daten zwischen dem Endgerät und dem entsprechenden Host unter Verwendung der Anbindung, die an der empfangenden Zugangsvorrichtung eingerichtet wurde, nach dem Aktualisieren.

4. Verfahren nach einem der vorhergehenden Ansprüche, **dadurch gekennzeichnet, dass** der Netzknoten ein Router in einem lokalen Netz ist.

5. Verfahren nach einem der vorhergehenden Ansprüche, **dadurch gekennzeichnet, dass** die Anbindung sich auf eine Anbindung zwischen einer Medium Access Control-Adresse der Netzschnittstelle und der Tunnel-IP-Adresse bezieht.

6. Verfahren nach einem der vorhergehenden Ansprüche, **dadurch gekennzeichnet, dass** das System ein IP-Version 6-Protokoll unterstützt, wodurch die Informationen bezüglich der neuen Anbindung an mindestens einen Netzknoten gesendet werden, der mit der sendenden Zugangsvorrichtung und der empfangenden Zugangseinrichtung verbunden ist, an eine Routingtabelle desselben, unter Verwendung eines Neighbour-Discovery-Protokolls.

7. Verfahren nach einem der vorhergehenden Ansprüche 1 bis 5, **dadurch gekennzeichnet, dass** das System ein IP-Version 4-Protokoll unterstützt, wodurch die Informationen bezüglich der neuen Anbindung an mindestens einen Netzknoten gesendet werden, der mit der sendenden Zugangsvorrichtung und der empfangenden Zugangsvorrichtung verbunden ist, an eine ARP-Tabelle desselben, unter Verwendung eines ARP-Protokolls.

8. Verfahren nach einem der vorhergehenden Ansprüche, **dadurch gekennzeichnet, dass** die sendende Zugangsvorrichtung und die empfangende Zugangsvorrichtung Zugangspunkte eines drahtlosen lokalen Netzes sind, die miteinander durch ein drahtgebundenes lokales Netz verbunden sind.

9. Telekommunikationssystem, umfassend mindestens eine sendende Zugangsvorrichtung, eine empfangende Zugangsvorrichtung, und ein Endgerät, wobei
die sendende Zugangsvorrichtung dazu eingerichtet ist, dem Endgerät eine Verbindung bereitzustellen und einen Tunnel zwischen einem entsprechenden Host und der sendenden Zugangsvorrichtung für Datenübertragungen des Endgeräts zu bilden;
**dadurch gekennzeichnet, dass**
die sendende Zugangsvorrichtung dazu eingerichtet ist, eine Tunnel-IP-Adresse für den Tunnel zuzuweisen, der für die Datenübertragung des Endgeräts gebildet werden soll, wobei der Tunnel an die Tunnel-IP-Adresse gebunden ist; die sendende Zugangsvorrichtung dazu eingerichtet ist, zumindest die Tunnel-IP-Adresse an eine empfangende Zugangsvorrichtung zu übertragen, in Reaktion auf das Erfassen einer Notwendigkeit, die Verbindung des Endgeräts dahingehend zu ändern, dass sie durch die empfangende Zugangsvorrichtung ausgeführt wird;
die empfangende Zugangsvorrichtung dazu eingerichtet ist, eine Anbindung zwischen der Tunnel-IP-Adresse und der Netzschnittstelle der empfangenden Zugangsvorrichtung zu bilden; und
die zweite Zugangsvorrichtung dazu eingerichtet ist, die Informationen bezüglich der neuen Anbindung zwischen der Netzschnittstelle der zweiten Zugangsvorrichtung und der Tunnel-IP-Adresse für mindestens einen Netzknoten in dem System zu aktualisieren.

10. Telekommunikationssystem nach Anspruch 9, **dadurch gekennzeichnet, dass** das Übertragen von Daten zwischen dem Endgerät und dem entsprechenden Host nach der Aktualisierung in dem Telekommunikationssystem unter Verwendung der an die empfangende Zugangsvorrichtung eingerichteten Anbindung eingerichtet ist.

11. Telekommunikationssystem nach Anspruch 9 oder 10, **dadurch gekennzeichnet, dass** der Netzknoten ein Router in einem lokalen Netz ist.

12. Telekommunikationssystem nach Anspruch 9, 10 oder 11, **dadurch gekennzeichnet, dass** die Anbindung sich auf die Anbindung zwischen einer MAC-Adresse der Netzschnittstelle und der Tunnel-IP-Adresse bezieht.

13. Zugangsvorrichtung für ein Telekommunikationsnetz, umfassend Mittel zum Versehen eines Endgeräts mit einer Verbindung und Mittel zum Bilden eines Tunnels zwischen einem entsprechenden Host und einer Zugangsvorrichtung für eine Datenübertragung des Endgeräts, **dadurch gekennzeichnet, dass**
die Zugangsvorrichtung dazu eingerichtet ist, mindestens eine Tunnel-IP-Adresse zu empfangen, die für einen Tunnel für die Datenübertragung des Endgeräts zugewiesen ist, in Reaktion auf das Erfassen einer Notwendigkeit, die Verbindung des Endgeräts dahingehend zu ändern, dass sie durch die Zugangsvorrichtung implementiert wird; und
die Zugangsvorrichtung dazu eingerichtet ist, eine Anbindung zwischen der Tunnel-IP-Adresse und der Netzschnittstelle zu bilden; und
die Zugangsvorrichtung dazu eingerichtet ist, die Informationen bezüglich der neuen Anbindung zwischen der Netzschnittstelle und der Tunnel-IP-Adresse an mindestens einem Netzknoten, der in dem System eingeschlossen ist, zu aktualisieren.

14. Zugangsvorrichtung nach Anspruch 13, **dadurch gekennzeichnet, dass** die Zugangsvorrichtung dazu eingerichtet ist, Daten nach einer Aktualisierung zwischen dem Endgerät und dem entsprechenden Host unter Verwendung der gebildeten Anbindung zu übertragen.

15. Zugangsvorrichtung nach Anspruch 13 oder 14, **dadurch gekennzeichnet, dass** sich die Anbindung auf die Anbindung zwischen einer MAC-Adresse der Netzschnittstelle und der Tunnel-IP-Adresse bezieht, wodurch
die Zugangsvorrichtung dazu eingerichtet ist, die Informationen bezüglich der Anbindung unter Verwendung eines ARP-Protokolls oder eines Neighbour Discovery-Protokolls zu senden.

## Revendications

1. Procédé pour effectuer un transfert intercellulaire d'un terminal sans fil dans un système de télécommunication, dans lequel un terminal est pourvu d'une connexion à un dispositif d'accès, à partir duquel un tunnel est agencé vers un hôte correspondant pour la transmission de données du terminal,
**caractérisé en ce que**
le procédé comprend les étapes suivantes effectuées par un dispositif d'accès de réception consistant à :
a- recevoir au moins une adresse IP de tunnellisation attribuée pour un tunnel pour la transmission de données du terminal d'un dispositif d'accès d'envoi en réponse à la détection d'un besoin de modification de la connexion du terminal à effectuer par le dispositif d'accès de réception ;
b- déterminer une association dans le dispositif d'accès de réception entre l'adresse IP de tunnellisation et une interface de réseau du dispositif d'accès de réception, et
c- mettre à jour les informations concernant la nouvelle association entre l'interface de réseau du dispositif d'accès de réception et l'adresse IP de tunnellisation pour au moins un noeud de réseau dans le système.

2. Procédé selon la revendication 1, **caractérisé par** les étapes consistant à :
déterminer des attributs de tunnellisation dans un serveur d'authentification, au moins une adresse IP de l'hôte correspondant et l'adresse IP de tunnellisation attribuée au terminal dans le dispositif d'accès d'envoi, en tant que partie de l'authentification du terminal avant l'agencement du tunnel vers l'hôte correspondant,
transférer les attributs de tunnellisation au dispositif d'accès d'envoi en réponse à une authentification réussie,
attribuer, au terminal dans le dispositif d'accès d'envoi, l'adresse IP utilisée dans la transmission de données du terminal et l'adresse IP de tunnellisation pour le tunnel à former pour la transmission de données du terminal qui est utilisée en tant que point d'extrémité du tunnel transférant des données du terminal,
associer le tunnel déterminé par les attributs de tunnellisation dans le dispositif d'accès d'envoi à l'adresse IP de tunnellisation,
former le tunnel, dont les points d'extrémité comprennent l'adresse IP de tunnellisation et l'adresse IP de l'hôte correspondant, et ensuite la transmission de données à l'adresse IP de tunnellisation est transférée à une interface de réseau du dispositif d'accès d'envoi.

3. Procédé selon la revendication 1 ou 2, **caractérisé par** l'étape consistant à :
transférer des données entre le terminal et l'hôte correspondant en utilisant l'association agencée pour le dispositif d'accès de réception après la mise à jour.

4. Procédé selon l'une quelconque des revendications précédentes, **caractérisé en ce que** le noeud de réseau est un routeur dans un réseau local.

5. Procédé selon l'une quelconque des revendications précédentes, **caractérisé en ce que** ladite association fait référence à une association entre une adresse de contrôle d'accès au support de l'interface de réseau et l'adresse IP de tunnellisation.

6. Procédé selon l'une quelconque des revendications précédentes, **caractérisé en ce que** le système prend en charge un protocole IP version 6, moyennant quoi les informations concernant la nouvelle association sont envoyées à au moins un noeud de réseau connecté au dispositif d'accès d'envoi et au dispositif d'accès de réception pour la table de routage de celui-ci en utilisant un protocole de découverte de voisins.

7. Procédé selon l'une quelconque des revendications 1 à 5 précédentes, **caractérisé en ce que** le système prend en charge un protocole IP version 4, moyennant quoi les informations concernant la nouvelle association sont envoyées à au moins un noeud de réseau connecté au dispositif d'accès d'envoi et au dispositif d'accès de réception pour une table ARP de celui-ci en utilisant un protocole ARP.

8. Procédé selon l'une quelconque des revendications précédentes, **caractérisé en ce que** le dispositif d'accès d'envoi et le dispositif d'accès de réception sont des points d'accès d'un réseau local sans fil connectés l'un à l'autre par l'intermédiaire d'un réseau local câblé.

9. Système de télécommunication comprenant au moins un dispositif d'accès d'envoi, un dispositif d'accès de réception et un terminal, dans lequel
le dispositif d'accès d'envoi est agencé pour fournir une connexion au terminal et pour former un tunnel entre un hôte correspondant et le dispositif d'accès d'envoi pour la transmission de données du terminal,
**caractérisé en ce que**
le dispositif d'accès d'envoi est agencé pour attribuer une adresse IP de tunnellisation pour le tunnel à former pour la transmission de données du terminal, à laquelle adresse IP de tunnellisation le tunnel est associé,
le dispositif d'accès d'envoi est agencé pour transférer au moins l'adresse IP de tunnellisation à un dispositif d'accès de réception en réponse à la détection d'un besoin de modifier la connexion du terminal à effectuer par le dispositif d'accès de réception ;
le dispositif d'accès de réception est agencé pour former une association entre l'adresse IP de tunnellisation et l'interface de réseau du dispositif d'accès de réception, et
le deuxième dispositif d'accès est agencé pour mettre à jour les informations concernant la nouvelle association entre l'interface de réseau du deuxième dispositif d'accès et l'adresse IP de tunnellisation pour au moins un noeud de réseau dans le système.

10. Système de télécommunication selon la revendication 9, **caractérisé en ce que** le transfert de données entre le terminal et l'hôte correspondant après la mise à jour est agencé dans le système de télécommunication en utilisant l'association agencée pour le dispositif d'accès de réception.

11. Système de télécommunication selon la revendication 9 ou 10, **caractérisé en ce que** le noeud de réseau est un routeur dans un réseau local.

12. Système de télécommunication selon la revendication 9, 10 ou 11, **caractérisé en ce que** ladite association fait référence à l'association entre une adresse MAC de l'interface de réseau et l'adresse IP de tunnellisation.

13. Dispositif d'accès pour un réseau de télécommunication comprenant des moyens pour fournir une connexion à un terminal et des moyens pour former un tunnel entre un hôte correspondant et un dispositif d'accès pour la transmission de données du terminal, **caractérisé en ce que**
le dispositif d'accès est agencé pour recevoir au moins une adresse IP de tunnellisation attribuée pour un tunnel pour la transmission de données du terminal en réponse à la détection d'un besoin de modifier la connexion du terminal à mettre en oeuvre par le dispositif d'accès, et
le dispositif d'accès est agencé pour former une association entre l'adresse IP de tunnellisation et l'interface de réseau, et
le dispositif d'accès est agencé pour mettre à jour les informations concernant la nouvelle association entre l'interface de réseau et l'adresse IP de tunnellisation pour au moins un noeud de réseau inclus dans le système.

14. Dispositif d'accès selon la revendication 13, **caractérisé en ce que**
le dispositif d'accès est agencé pour transférer des données après une mise à jour entre le terminal et l'hôte correspondant en utilisant l'association formée.

15. Dispositif d'accès selon la revendication 13 ou 14, **caractérisé en ce que** ladite association fait référence à l'association entre une adresse MAC de l'interface de réseau et l'adresse IP de tunnellisation, moyennant quoi
le dispositif d'accès est agencé pour envoyer les informations concernant ladite association en utilisant un protocole ARP ou un protocole de découverte de voisins.
